# EUROPEAN PATENT APPLICATION

(11) **EP 4 806 859 A1**
(43) Date of publication of application: **16.09.2026**
(21) Application number: 24911387.9
(22) Date of filing: 27.12.2024
(51) Int. Cl.: C03C 25/106, C03C 25/223, G02B 6/02, C03B 37/027, C03C 25/44, C03C 25/42

(54) **HIGH TEMPERATURE-RESISTANT CARBON-COATED OPTICAL FIBER, PREPARATION METHOD THEREFOR, AND PREPARATION SYSTEM THEREOF**

(30) Priority: 30.12.2023 CN 202311859171
(71) Applicant: Yangtze Optical Fibre and Cable Joint Stock Limited Company, East Lake High-tech Development Zone Wuhan Hubei 430073 (CN)
(72) Inventor: KE, Mingxin, Wuhan, Hubei 430073 (CN); GAO, Hao, Wuhan, Hubei 430073 (CN); CHEN, Jie, Wuhan, Hubei 430073 (CN); QIAN, Bin, Wuhan, Hubei 430073 (CN); FANG, Zucheng, Wuhan, Hubei 430073 (CN); WANG, Song, Wuhan, Hubei 430073 (CN); YANG, Kun, Wuhan, Hubei 430073 (CN); YANG, Chen, Wuhan, Hubei 430073 (CN)
(74) Representative: Lorenz Seidler Gossel Part. mbB
(86) International application number: PCT/CN2024/142951
(87) International publication number: WO 2025/140466

(57) **Abstract**

The present invention discloses a high-temperature resistant carbon-coated optical fiber, characterized by comprising a core layer, a cladding layer, a carbon coating layer, and a resin coating layer arranged in sequence from inside to outside, wherein the carbon coating layer comprises a first carbon film layer and a second carbon film layer; the first carbon film layer is a graphite-like amorphous carbon film; and the second carbon film layer is a diamond-like amorphous carbon film or a graphite-like amorphous carbon film, or the second carbon film layer is a composite carbon film layer formed by stacking at least one layer of graphite-like amorphous carbon film and at least one layer of diamond-like amorphous carbon film in a thickness direction. The present invention also discloses a corresponding preparation method and system, which solve the problem that an optical fiber on which a layer of carbon film has been deposited cannot be preheated during traditional cold-wall chemical vapor deposition. The graphite-like amorphous carbon film deposited on the inner layer of the optical fiber of the present invention can be tightly combined with the optical fiber and has good sealing performance, and the diamond-like amorphous carbon film deposited on the outer layer has high mechanical strength and good wear resistance, thereby providing a good protection for the optical fiber.

## Description

### Field of the Technology

The present invention belongs to the technical field of optical fiber manufacturing, and specifically relates to a high-temperature resistant carbon-coated optical fiber, preparation method therefor and preparation system thereof.

### Background

Carbon-coated optical fibers are also known as carbon-sealed optical fibers or optical fibers coated with carbon. The carbon-coated optical fiber is provided with a thin carbon film on the surface of its glass fiber. This film offers excellent sealing performance and can improve the reliability of the glass fiber. On the one hand, it can prevent moisture from attacking the surface of the glass fiber and causing strength degradation, on the other hand, it can prevent hydrogen molecules from diffusing into the core layer of the optical fiber. Conventional polymer protective layers can block liquid water to some extent, but cannot isolate the diffusion of water molecules or smaller hydrogen molecules. Water molecules accelerate the crack propagation on the surface of the glass fiber, while the invasion of hydrogen molecules into the core layer causes significantly increase in the optical loss of the optical fiber. Carbon-coated optical fibers can effectively solve the above problems.

The preparation of carbon-coated optical fibers requires depositing a thin carbon film of several tens of nanometers on the surface of a cladding layer prior to applying conventional coatings for optical fiber. The thin carbon film is prepared by means of vapor deposition, through which carbon and other elements are deposited on the surface of a bare optical fiber to form an amorphous carbon film. Depending on the mechanism, the vapor deposition methods can be classified into physical vapor deposition (PVD) and chemical vapor deposition (CVD). Common methods include magnetron sputtering, plasma enhanced chemical vapor deposition, thermochemical vapor deposition, etc. The currently popular method for carbon film deposition is thermochemical vapor deposition method, it utilizes a heat source to enablechemical reactions among gaseous raw material molecules in the gas phase or at the gas-solid interface, thereby achieving the deposition of carbon film on the bare optical fiber.

During the deposition of the carbon film, the heat for activating the reaction is generally provided in two ways: one method involves introducing hydrocarbons or other raw gases into a reaction chamber and heating the reaction chamber, the raw gases undergo thermal decomposition in the gas phase, and the microparticles generated from the reaction deposit on the surface of the optical fiber to complete the deposition of carbon film; and this method is referred to as hot-wall chemical vapor deposition. In the hot-wall chemical vapor deposition, the overall temperature of the reaction chamber is relatively high, the carbon film is not only deposited on the surface of the cladding layer of the optical fiber, but also deposited on the walls of the reaction chamber; deposits tend to buildup as the reaction proceeds over time, which impedes the continuation of the reaction.

The other method involves introducing raw gases into the reaction chamber without heating the chamber, instead, the optical fiber is heated by means of preheating or directional heating, such that the gases are firstly adsorbed on the surface of the optical fiber and then are subjected to pyrolysis reaction; and this method is referred to as cold-wall chemical vapor deposition. In cold-wall chemical vapor deposition, reaction only occurs on the surface of the cladding layer of the optical fiber with fewer by-products. Theoretically, it is easy to produce long-length carbon-coated optical fibers with high-quality carbon film; however, during cold-wall chemical vapor deposition, the temperature of the preheated fiber drops rapidly, making it difficult to control the reaction temperature; meanwhile, since heating can induce oxidation of carbon film, only a single layer of carbon film can be generated by this deposition method, resulting in a single structure of the carbon film. Therefore, the carbon-coated optical fiber formed has a poor resistance to mechanical damage, and cannot adapt to application requirements in special harsh environments.

### Summary

In view of one or more of the above defects or improvement requirements in the prior art, the present invention provides a high-temperature resistant carbon-coated optical fiber, and preparation method therefor and preparation system thereof, which solve the problem that an optical fiber on which a layer of carbon film has been deposited cannot be preheated during traditional cold-wall chemical vapor deposition. The graphite-like amorphous carbon film deposited on the inner layer of the optical fiber can be tightly combined with the optical fiber and has good sealing performance; and the diamond-like amorphous carbon film deposited on the outer layer has a high mechanical strength and a good wear resistance, thereby providing a good protective effect throughout the entire life cycle of the optical fiber.

In order to achieve the above objectives, according to a first aspect of the present invention, there is provided a high-temperature resistant carbon-coated optical fiber, comprising a core layer, a cladding layer, a carbon coating layer, and a resin coating layer arranged in sequence from inside to outside; wherein,
the carbon coating layer comprises a first carbon film layer and a second carbon film layer;
the first carbon film layer is a graphite-like amorphous carbon film; and
the second carbon film layer is a diamond-like amorphous carbon film or a graphite-like amorphous carbon film, or the second carbon film layer is a composite carbon film layer formed by stacking at least one layer of graphite-like amorphous carbon film and at least one layer of diamond-like amorphous carbon film in a thickness direction.

As a further improvement of the present invention, the carbon-coated optical fiber comprises a carbon-coated single-mode optical fiber and a carbon-coated multi-mode optical fiber; and after being kept in a hydrogen environment at 85°C and 11 atm for 7 days, the carbon-coated single-mode optical fiber has an additional attenuation of < 0.2 dB/km at a wavelength of 1240 nm, and the carbon-coated multi-mode optical fiber has an additional attenuation of < 0.2 dB/km at a wavelength of 850 nm.

According to a second aspect of the present invention, there is provided a method for preparing a high-temperature resistant carbon-coated optical fiber, comprising the following steps:
S1, heating an optical fiber and then placing it in a first carbon-coating reaction chamber for carbon film deposition, to form a first carbon film layer on a surface of the optical fiber, wherein the first carbon film layer is a graphite-like amorphous carbon film;
S2, placing the optical fiber with the first carbon film layer deposited on its surface in a second carbon-coating reaction chamber for carbon film deposition, to form a second carbon film layer on the surface of the optical fiber, wherein the second carbon film layer is a graphite-like amorphous carbon film or a diamond-like amorphous carbon film, or the second carbon film layer is a composite carbon film layer formed by stacking at least one layer of graphite-like amorphous carbon film and at least one layer of diamond-like amorphous carbon film in a thickness direction;
   wherein, a first induction coil is provided on an outer periphery of the second carbon-coating reaction chamber, and a temperature of a reaction zone on the surface of the optical fiber inside the second carbon-coating reaction chamber is controlled by the first induction coil; and
S3, coating the surface of the optical fiber deposited with the second carbon film layer with a thermosetting coating, and placing the optical fiber in a curing device for thermal curing, to obtain the high-temperature resistant carbon-coated optical fiber.

As a further improvement of the present invention, a second induction coil is provided on an outer periphery of the curing device, and a curing temperature of the thermosetting coating inside the curing device is controlled by the second induction coil.

As a further improvement of the present invention, in step S1, a temperature of the optical fiber entering the first carbon-coating reaction chamber is controlled to be 800-1100°C, such that the first carbon film layer is a graphite-like amorphous carbon film.

As a further improvement of the present invention, in step S2, a temperature of the optical fiber entering the second carbon-coating reaction chamber is controlled to be 800-1100°C, such that the second carbon film layer is a graphite-like amorphous carbon film layer; or,
in step S2, a temperature of the optical fiber entering the second carbon-coating reaction chamber is controlled to be higher than 1100°C, such that the second carbon film layer is a diamond-like amorphous carbon film.

As a further improvement of the present invention, a raw gas in the first carbon-coating reaction chamber and the second carbon-coating reaction chamber comprises a hydrocarbon gas and a protective gas, and a volume proportion of the hydrocarbon gas in the raw gas is 15% to 75%; and a feed rate of the raw gas is 250 ml/min-2 L/min, an exhaust rate is higher than the feed rate by 0.5-1 L/min, and a drawing speed is 40-250 m/min.

As a further improvement of the present invention, in step S3, a spacing between adjacent turns of the second induction coil gradually decreases from an optical fiber inlet end to an optical fiber outlet end of the curing device.

According to the third aspect of the present invention, there is provided a system for preparing a high-temperature resistant carbon-coated optical fiber, applied to the method for preparing a high-temperature resistant carbon-coated optical fiber, the system comprises a drawing furnace, a first carbon-coating reaction chamber, at least one second carbon-coating reaction chamber, and at least one set of resin coating and curing device, arranged in sequence; wherein,
the drawing furnace is configured to heat an optical fiber preform and draw it into an optical fiber; meanwhile, residual heat of the drawing furnace is used to heat the optical fiber;
the first carbon-coating reaction chamber is configured for forming the first carbon film layer;
the second carbon-coating reaction chamber is configured for forming the second carbon film layer, and a first induction coil is provided on an outer periphery of the second carbon-coating reaction chamber; and
the resin coating and curing device comprises a resin coating device and a curing device; the resin coating device is used for coating a thermosetting coating; and the curing device is used for curing the thermosetting coating.

As a further improvement of the present invention, a second induction coil is provided on an outer periphery of the curing device.

Overall, compared with the prior art, the above technical solutions conceived in the present invention achieve the following advantageous effects:
(1) According to the high-temperature resistant carbon-coated optical fiber of the present invention, the carbon-coating layer has a multi-layer composite structure, with tight bonding between carbon layers and between the carbon layer and the cladding layer. The innermost graphite-like amorphous carbon film is mainly composed of a high content of SP2 bonds, exhibiting good sealing properties and ductility. It can reduce the erosion of the optical fiber caused by hydrogen gas and water vapor, and prevent the propagation of microcracks on the surface of the cladding layer thereby greatly improving the service life of the optical fiber. The diamond-like amorphous carbon film is composed of a certain amount of SP3 and SP2 bonds, the SP3 chemical bonds endow the carbon film layer with a relatively high hardness and a good mechanical strength, which can improve the resistance of the cladding layer of the optical fiber and the graphite-like amorphous carbon film to mechanical damage, thereby significantly improving the service life of the high-temperature resistant carbon-coated optical fiber in harsh high-temperature environments.
(2) According to the method for preparing the high-temperature resistant carbon-coated optical fiber of the present invention, firstly, a preform is drawn into an optical fiber; then, a carbon film is deposited on the surface of the cladding layer of the optical fiber by conventional cold-wall chemical vapor deposition; on this basis, one or more carbon films are deposited by induction heating, and the deposition reaction is activated by induction heating; finally, the thermosetting coating is coated and cured by induction heating, the carbon film directly serves as the heat source for subsequent deposition or curing, thereby solving the problem that an optical fiber deposited with a carbon film cannot be preheated during the traditional cold-wall chemical vapor deposition. Furthermore, the inner layer of the carbon-coating layer is mainly composed of a graphite-like amorphous carbon film, which forms SI-C bonds with the optical fiber, thereby achieving a tight bonding and good sealing performance; meanwhile, the SI-C bonds allow to form a gradually transitional structure from the optical fiber to the carbon layer. The outer layer is mainly composed of a diamond-like amorphous carbon film with a high mechanical strength and a good wear resistance, thereby providing a protective effect throughout the life cycle of the optical fiber.
(3) According to the method for preparing the high-temperature resistant carbon-coated optical fiber of the present invention, the deposition region serves as the heat source, thereby achieving the advantages of fewer by-products as achieved by traditional cold-wall chemical vapor deposition, and easy production of long-length optical fibers. Moreover, in the present invention, the carbon film is used as a heat source, thereby achieving a high heating rate, a high thermal efficiency, and easy controllability with low energy consumption.
(4) According to the method for preparing the high-temperature resistant carbon-coated optical fiber of the present invention, the thermosetting coating is cured by induction heating, and the thermal curing process is carried out from inside to outside, resulting in high curing quality and less occurrence of bubbling, so as to improve the curing quality of the coating.
(5) According to the system for preparing the high-temperature resistant carbon-coated optical fiber of the present invention, the induction coil is located outside the corresponding reaction chamber. This arrangement prevents contamination, and avoids the degradation of the induction heating effect caused by the deposition of excessive carbon film and by-products on the coil when it is arranged inside the chamber.

### Brief Description of the Drawings

Fig. 1 is a flowchart of a method for preparing a high-temperature resistant carbon-coated optical fiber according to an embodiment of the present invention;
Fig. 2 is a structural schematic diagram of a system for preparing a high-temperature resistant carbon-coated optical fiber according to one embodiment of the present invention;
Fig. 3 is a structural schematic diagram of a system for preparing a high-temperature resistant carbon-coated optical fiber according to another embodiment of the present invention;
Fig. 4 is a structural schematic diagram of a first carbon-coating reaction chamber involved in a system for preparing a high-temperature resistant carbon-coated optical fiber according to an embodiment of the present invention;
Fig. 5 is a structural schematic diagram of a second carbon-coating reaction chamber involved in a system for preparing a high-temperature resistant carbon-coated optical fiber according to an embodiment of the present invention;
Fig. 6 is a structural schematic diagram of a curing device involved in a system for preparing a high-temperature resistant carbon-coated optical fiber according to an embodiment of the present invention;
Fig. 7 is a structural schematic diagram of the high-temperature resistant carbon-coated optical fiber prepared in Example 1 of the present invention; and
Fig. 8 is a structural schematic diagram of the high-temperature resistant carbon-coated optical fiber prepared in Example 2 of the present invention.

In all the figures, the like reference numerals indicate the like technical features, specifically: 1-First carbon-coating reaction chamber, 2-Second carbon-coating reaction chamber, 3-Resin coating cup, 4-Curing device, 5-Optical fiber heating furnace, 6-Drawing furnace, 7-Preform;
11-First deposition chamber, 12-First sealing chamber; 21-Second deposition chamber, 22-Second sealing chamber, 23-First induction coil, 41-Curing chamber, 42-Second induction coil;
10-Core layer, 20-Cladding layer, 30-Carbon coating layer, 40-Resin coating layer, 50- Inner resin coating, 60- Outer resin coating.

### Detailed Description of the Embodiments

In order to make the objectives, technical solutions, and advantages of the present invention more clear, the present invention will be further illustrated in detail in combination with the accompanying drawings and embodiments. It should be understood that, the specific embodiments described herein are only used for explaining the present invention, but are not intended to limit the present invention. In addition, the technical features involved in the various embodiments of the present invention described below may be combined with each other as long as they do not conflict with each other.

In the description of the present invention, it should be understood that, the orientation or position relationship indicated by the terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential", etc. is based on the orientation or position relationship shown in the accompanying drawings, is only used for the convenience of describing the present invention and simplifying the description, but is not intended to indicate or imply that the device or element referred to must have a specific orientation, be constructed and operated in a specific orientation, and therefore, it cannot be understood to limiting the present invention.

In addition, the terms "first" and "second" are only used for the purpose of description, but cannot be understood to indicate or imply a relative importance or implicit the number of the technical features indicated. Therefore, the features that are defined by "first" and "second" may explicitly or implicitly include at least one of these features. In the description of the present invention, the term "multi" means at least two, such as two, three, etc., unless otherwise specifically defined.

In the present invention, unless otherwise explicitly specified and defined, the terms such as "installed", "connected", "mounted", "fixed" should be understood in a broad sense, for example, they may mean a fixed connection, a detachable connection, or an integral connection; they may mean a mechanical connection, or an electrical connection; and they may mean a direct connection, or an indirect connection via an intermediate medium, and may mean an internal communication between two components or an interaction relationship between two components, unless otherwise explicitly specified. For those of ordinary skill in the art, the specific meanings of the above-described terms in the present invention may be understood according to the specific situations.

In the present invention, unless otherwise explicitly specified and limited, when a first feature is described as being "above" or "below" a second feature, it may mean that the first feature is in direct contact with the second feature, or that the first feature and the second feature are in indirect contact through an intermediate medium. Moreover, when a first feature is described as being "on", "above" or "over" a second feature, it may mean that the first feature is directly above or diagonally above the second feature, or simply that the first feature is horizontally higher than the second feature. When a first feature is described as being "under", "below" or "beneath" a second feature, it may mean that the first feature is directly below or diagonally below the second feature, or simply that the first feature is horizontally lower than the second feature.

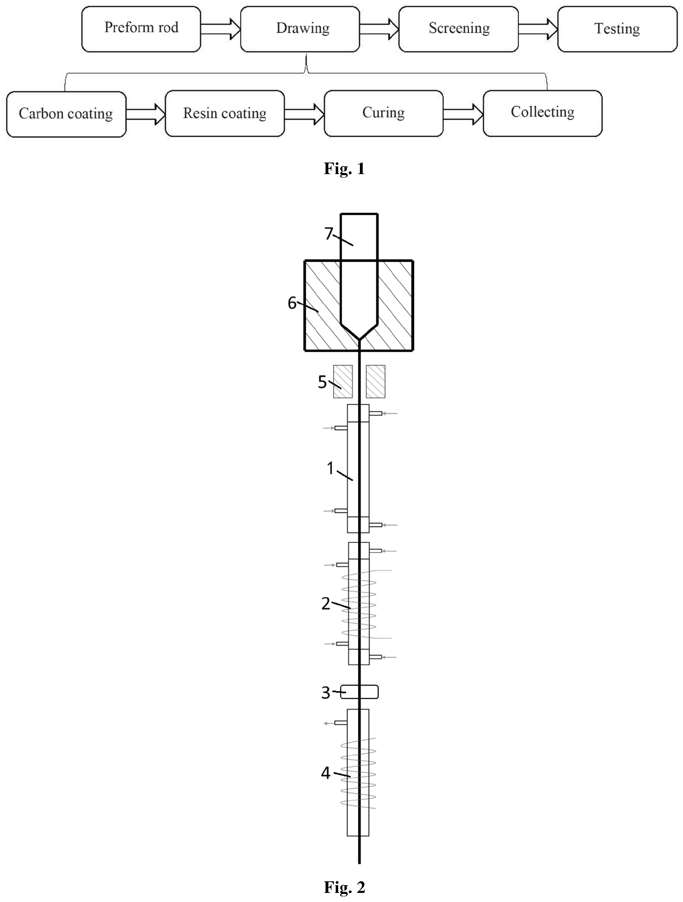

As shown in Figure 1, a method for preparing a high-temperature resistant carbon-coated optical fiber according to an embodiment of the present invention comprises deposition of carbon film, and coating and curing of high-temperature resistant coating, and specifically comprises the following steps:
(1) Providing a first carbon-coating reaction chamber; heating an optical fiber and then performing carbon film deposition in the first carbon-coating reaction chamber, such that the raw gas in the first carbon-coating reaction chamber forms a first carbon film layer on a surface of the optical fiber.

The optical fiber described in the present invention comprises a core layer and a cladding layer provided outside the core layer; and it is obtained by heating and drawing a preform in a drawing furnace. In this step, the optical fiber is heated by using the residual heat (at about 2000°C) from a drawing furnace or to heated to 800-1100°C by a heating device, such that the temperature of the optical fiber entering the first carbon-coating reaction chamber is 800-1100°C. After the optical fiber enters the first carbon-coating reaction chamber, the raw gas reacts on the surface of the cladding layer of the optical fiber to form a layer of carbon film, which is the first carbon film layer.

The first carbon film layer generated in this step has a thickness of 20-40 nm, and a surface roughness of ≤3 nm. The carbon film is uniformly deposited, such that the first carbon film layer has a relatively good sealing performance, generates little stress on the cladding layer of the optical fiber, and thus exerts minimal influence on the strength of the optical fiber.

In a preferred embodiment, the raw gas comprises a hydrocarbon gas and a protective gas. The hydrocarbon gas includes but is not limited to benzene, methane, acetylene, etc. The protective gas is an inert gas or nitrogen gas. The hydrocarbon gas and the protective gas are mixed in a certain proportion to form the raw gas, which is introduced into the first carbon-coating reaction chamber. The specific proportion and flow rate of the hydrocarbon gas and the protective gas depend on the specific process conditions, designed deposition thickness, etc. A proportion of the hydrocarbon gas in the raw gas is preferably between 15% and 75%, a total flow rate of the raw gas (i.e. a feed rate of the raw gas) is preferably between 250 ml/min and 2 L/min, an exhaust speed is required to be higher than the feed rate by 0.5-1 L/min, and a drawing speed is 40-250 m/min.

In step (1), since the temperature of the optical fiber entering the first carbon-coating reaction chamber is 800-1100°C, the reaction temperature of the raw gas in the first carbon-coating reaction chamber is ensured to be 800-1100°C, thereby forming a graphite-like amorphous carbon film. The carbon atoms of this carbon film mainly have a SP2 hybrid structure, in which three of the four electrons outside the carbon nucleus form chemical bonds with adjacent atoms in a plane, while the fourth electron generates a weak bonding through van der Waals forces, eventually forming a dense graphite-like layered structure. A percentage of SP2 bonds in the carbon atoms of the graphite-like layered structure is 95% or more, and the connection between layers is achieved by van der Waals forces, allowing for a certain degree of slippage. Simultaneously, the inner layer of the carbon film bonds with the silicon on the surface of the cladding layer at a high temperature to achieve a tight connection with the cladding layer, therefore, the first deposited carbon film can play a sealing role in blocking hydrogen gas and water. The bonding between the first carbon film layer and the cladding layer originates from the reaction between C and Si at a high temperature, which occurs simultaneously with the deposition of the graphite-like carbon layer.

(2) Providing at least one second carbon-coating reaction chamber with a first induction coil arranged on its outer periphery; utilizing the first induction coil to heat the optical fiber coated with the first carbon film layer in the corresponding second carbon-coating reaction chamber, and performing at least one carbon film deposition, such that the raw gas in the second carbon-coating reaction chamber forms a second carbon film layer outside the first carbon film layer;

In the second carbon film deposition process of the present invention, heat required for the deposition reaction is supplied via the inductive electrothermal effect. Specifically, an induction coil is disposed around the periphery of the corresponding carbon-coating reaction chamber, and during the preparation process, an alternating current is applied to the coil, such that an alternating magnetic field is generated around the induction coil. The first carbon film layer generates an induced potential under the action of the alternating magnetic field, and eddy currents are formed in the carbon film to generate high temperature, which triggers the reaction and deposition of raw materials around the carbon film, thereby forming the second carbon film layer.

In a preferred embodiment, the raw gas comprises a hydrocarbon gas and a protective gas. The hydrocarbon gas includes but is not limited to benzene, methane, acetylene, etc; and the protective gas includes an inert gas or nitrogen gas. The hydrocarbon gas and the protective gas are mixed in a certain proportion to form the raw gas, which is introduced into the second carbon-coating reaction chamber. The specific proportion and flow rate of the hydrocarbon gas and the protective gas depend on the specific process conditions, designed deposition thickness, etc. A volume proportion of the hydrocarbon gas in the raw gas is preferably between 15% and 75%, a total flow rate of the raw gas (i.e. a feed rate of the raw gas) is preferably between 250 ml/min and 2 L/min, an exhaust speed is required to be higher than the feed rate by 0.5-1 L/min, and a drawing speed is 40-250 m/min.

In step (2), the second carbon film layer may be a diamond-like amorphous carbon film or a graphite-like amorphous carbon film. By designing the pitch and diameter of the induction coil, a uniform temperature field can be achieved. When the temperature of the reaction zone on the surface of the optical fiber in the second carbon-coating reaction chamber is controlled above 1100°C (preferably 1100-1300°C) by controlling the parameters of the induced current, a layer of diamond-like amorphous carbon film can be obtained. In this film, the carbon atoms mainly form a SP3 hybridization structure, the percentage of SP3 bonds in the carbon atoms is 95% or more; and the four extranuclear electrons of carbon atoms form chemical bonds with the valence electrons of adjacent atoms, thereby ultimately forming a diamond-like structure, which has high hardness and good wear resistance. It not only preserves the sealing property of the inner carbon film, but also provides effective protection for the optical fiber when the resin coating is damaged, thereby greatly improving the reliability of the optical fiber in harsh environments.

In addition, when the temperature of the reaction zone on the surface of the optical fiber in the second carbon-coating reaction chamber is controlled to be 800-1100°C by adjusting the parameters of the induced current, a new layer of graphite-like amorphous carbon film can be formed on the first layer of graphite-like amorphous carbon film.

It can be understood that the graphite-like amorphous carbon film is electrically conductive, the alternating current in the induction coil generates an alternating magnetic field, which induces eddy current in the graphite-like amorphous carbon film to achieve heating effect. Therefore, it is necessary to firstly deposit a layer of carbon film (the first carbon film layer), and on the basis that the optical fiber is externally coated with the carbon film, heat can be generated by using the principle of electromagnetic induction to carry out subsequent deposition.

It should be noted that single or multiple depositions may be performed outside the first carbon film layer as required, so as to form the second carbon film layer, that is, the second carbon film layer comprises at least one layer. The second carbon film layer may be a diamond-like amorphous carbon film or a graphite-like amorphous carbon film, or the second carbon film layer may also be a composite carbon film layer formed by stacking at least one layer of graphite-like amorphous carbon film and at least one layer of diamond-like amorphous carbon film in a thickness direction. That is, only a diamond-like amorphous carbon film may be coated outside the first carbon film layer, or two types of carbon films in different arrangements may be coated outside the first carbon film layer. By comparison, coating two types of carbon films in different arrangements outside the first carbon film layer can, to some extent, prevent the diamond-like amorphous carbon film from becoming excessively thick, thereby avoiding issues arising from excessive internal stress that would otherwise adversely affect the optical fiber strength, as compared with only depositing the diamond-like amorphous carbon film.

When the second carbon film layer formed by the above-described method is a diamond-like amorphous carbon film, it has a thickness of 20-60 nm, and a surface roughness of ≤3 nm. The carbon film is uniformly deposited, has a high hardness, and can withstand high lateral stress.

When the second carbon film layer formed by the above-described method is a graphite-like amorphous carbon film, it has a thickness of 10-30 nm, and a surface roughness of ≤3 nm. The carbon film is uniformly deposited, and has a good sealing performance.

When the second carbon film layer formed by the above-described method is a composite carbon film layer formed by stacking at least one layer of graphite-like amorphous carbon film and at least one layer of diamond-like amorphous carbon film in a thickness direction, each graphite-like amorphous carbon film has a thickness of 10-20 nm, and a surface roughness of ≤3 nm; and each diamond-like amorphous carbon film has a thickness of 10-30 nm, and a surface roughness of ≤3 nm. The composite carbon film layer has a total thickness of ≤150 nm. If the composite carbon film layer is too thick, the overall carbon film layer will have high stress.

Preferably, each deposition is provided with a corresponding second carbon-coating reaction chamber, and the carbon film deposited in each reaction chamber corresponds to one layer. By adopting multiple depositions, on the one hand, the thickness can be easily and quickly controlled by adjusting the magnitude of current as needed, the magnitude of alternating current affects the eddy currents generated inside the carbon film, thereby affecting the temperature; and a higher temperature leads to a faster reaction rate and consequently a greater deposition thickness. On the other hand, under the same total deposition thickness, a higher drawing speed can be achieved through multiple depositions (the higher the speed, the thinner the single-pass deposition thickness under the same conditions). On the other hand, a better performance of the optical fiber may also be achieved by designing a carbon film structure with different layers, and diverse amorphous states can be formed in each layer through different temperature controls, a heating temperature for forming the graphite-like amorphous carbon film is 800-1100°C, and a heating temperature for forming the diamond-like amorphous carbon film is > 1100°C. Due to different temperatures, the atomic arrangements and combinations vary during chemical reactions (in the graphite-like carbon film, each carbon atom uses three electrons to form covalent bonds with other carbon atoms, while in diamond-like carbon films, all four external electrons of each carbon atom form covalent bonds with other carbon atoms), thereby resulting in different amorphous states. The graphite-like amorphous carbon film is mainly composed of a graphite structure, and thus has properties similar to those of the graphite; and the diamond-like amorphous carbon film mainly has a diamond structure, and thus has properties similar to those of the diamond, thereby achieving different functional orientations.

For example, the two-layer structure with the graphite-like carbon film as the inner layer and the diamond-like carbon film as the outer layer may achieve a good sealing performance while ensuring the mechanical performance of the carbon film. The continuous multi-layer structure consisting of graphite-like carbon film, diamond-like carbon film, graphite-like carbon film and diamond-like carbon film can enhance the sealing performance and the mechanical performance of the carbon film, while maintaining the ductility of the carbon film.

In addition, the graphite-like amorphous carbon film has a relatively good heating effect. Compared with graphite-like amorphous carbon film, the diamond-like amorphous carbon film possesses relatively poor electrical conductivity and inferior induction heat-generating effect. Therefore, when depositing further diamond-like carbon film outside the existing diamond-like carbon film, the heat generation is mainly carried out by the graphite-like amorphous carbon film formed in the first deposition.

(3) providing a curing device with a second induction coil arranged on an outer periphery thereof; applying a thermosetting coating on the surface of the second carbon film layer, thermally curing the thermosetting coating from inside to outside in the curing device by using the second induction coil, and performing the coating and curing processes of the thermosetting coating at least once to obtain the high-temperature resistant carbon-coated optical fiber;

In a preferred embodiment, a uniform temperature field is obtained by designing the pitch and diameter of the second induction coil, and the curing temperature of the coating in the curing device is controlled to be 80-350°C by adjusting the parameters of the induced current, thereby forming a resin-coating layer.

The thermosetting coating is a high-temperature resistant thermosetting resin, including but not limited to polyimide resin, acrylic resin, etc. In a preferred embodiment, the dip-coating of the thermosetting coating is achieved by means of a coating cup, and the curing device is preferably a glass chamber. The optical fiber coated with the carbon coating passes through the coating cup containing polyimide, and then enters the glass chamber, in which the thermosetting coating is cured in an atmosphere of protective gas (inert gas or nitrogen gas). A second induction coil is disposed coaxially surrounding the glass chamber. During the curing process, an alternating current is applied to the coil, and an alternating magnetic field is generated around the induction coil; and the carbon film (mainly a graphite-like amorphous carbon film) generates an induced potential under the action of the alternating magnetic field, and eddy currents are formed in the carbon film, thereby generating a high temperature and triggering the curing of polyimide around the carbon film.

In the present invention, the thermosetting coating is cured by using induction heating. The thermal curing process is carried out from inside to outside, with high curing quality and less occurrence of bubbling, such that the curing quality of the coating can be improved. During the induction heating curing process, the temperature is precisely controlled with fast heating speed and uniform heat distribution; and different curing processes can be conveniently and reasonably configured to improve the drawing speed of the thermosetting coating.

It should be noted that, in this step, the coating and curing processes of the thermosetting coating can be repeated multiple times to achieve an appropriate coating thickness.

It should be noted that, in this embodiment, the curing of the resin-coating layer can also be achieved by heating with a common heating furnace.

For the carbon-coated optical fiber formed by the above-described preparation method, after being kept in a hydrogen gas environment at 85°C and 11 atm for 7 days, the carbon-coated single-mode optical fiber shows an additional attenuation of <0.2 dB/km at a wavelength of 1240 nm , and the carbon-coated multi-mode optical fibe has an additional attenuation of <0.2 dB/km at a wavelength of 850 nm.

According to the method for preparing the high-temperature resistant carbon-coated optical fiber of the present invention, firstly, a preform is drawn into an optical fiber; then a carbon film is deposited on the surface of the cladding layer of the optical fiber by conventional cold-wall chemical vapor deposition; on this basis, one or more carbon films are deposited by induction heating, and the deposition reaction is activated by induction heating; finally, the thermosetting coating is coated and thermally cured by induction heating, wherein the carbon film directly serves as a heat source for subsequent deposition or curing. The present invention solves the problem that the optical fiber on which a layer of carbon film has been deposited cannot be preheated during traditional cold-wall chemical vapor deposition. The deposition region serves as the heat source in the present invention, thereby achieving the advantages of fewer by-products as achieved by traditional cold-wall chemical vapor deposition, and easy production of long-length optical fibers. And, in the present invention, the carbon film is used as a heat source, thereby achieving a high heating rate, a high thermal efficiency, and easy controllability with low energy consumption.

With the high-temperature resistant carbon-coated optical fiber obtained by the method of the present invention, both the initially deposited carbon film and the subsequently deposited carbon film are amorphous carbon films, though they have slight variations in their structural composition. The inner layer is mainly composed of a graphite-like amorphous carbon film, which forms SI-C bonds with the optical fiber, thereby achieving tight bonding and excellent sealing performance; meanwhile, the SI-C bonds create gradually transitional structure from the optical fiber to the carbon layer. The outer layer is mainly composed of a diamond-like amorphous carbon film, which has a dense structure and a high mechanical strength, thereby providing protection for the sealing performance of the graphite-like amorphous carbon film. It also possesses good wear resistance and thus provides effective protection throughout the life cycle of the optical fiber.

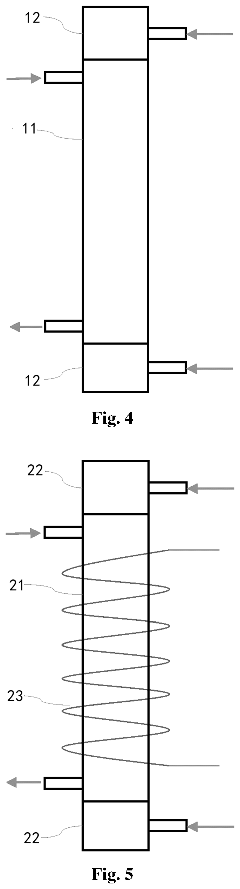

Further, as shown in Figs. 2 to 5, according to an embodiment of the present invention, there is also provided a system for preparing the high-temperature resistant carbon-coated optical fiber, comprising, a drawing furnace, a first carbon-coating reaction chamber, at least one second carbon-coating reaction chamber, and at least one set of resin coating and curing devices, arranged in sequence, wherein the resin coating and curing device comprises a resin coating device and a curing device.

In a first embodiment of the present invention, as shown in Figure 2, the system for preparing the high-temperature resistant carbon-coated optical fiber according to this embodiment comprises a drawing furnace 6, an optical fiber heating furnace 5, a first carbon-coating reaction chamber 1, a second carbon-coating reaction chamber 2, a resin coating cup 3, and a curing device 4 arranged in sequence.

The first carbon-coating reaction chamber 1 is used for forming the first carbon film layer. The first carbon-coating reaction chamber 1 preferably has a glass round tube structure and comprises a first deposition chamber 11 and first sealing chambers 12, wherein the first sealing chambers 12 are disposed at two axial ends of the first deposition chamber 11. The first sealing chambers 12 each are provided with a protective gas inlet, and during the reaction process, a protective gas (inert gas or nitrogen gas) is continuously introduced through the corresponding protective gas inlet to prevent air from entering the first deposition chamber 11, thereby achieving the purpose of gas sealing. Preferably, the first carbon-coating reaction chamber 1 has an inner diameter of 20-40 mm and a length of 300-400 mm. The first sealing chamber 12 has an inner diameter the same as that of the first deposition chamber 11, and has a length of preferably 20-40 mm. The first deposition chamber 11 is provided with corresponding optical fiber through holes at its two axial ends for the entry and exit of the optical fibers, wherein the optical fiber through hole has a diameter of preferably 5-15 mm.

The first deposition chamber 11 is provided thereon with a raw gas inlet and a raw gas outlet. Preferably, the raw gas inlet is disposed at the end of the first deposition chamber 11 close to the optical fiber inlet, and the raw gas outlet is disposed at the end of the first deposition chamber 11 close to the optical fiber outlet. In the first deposition chamber 11, the raw gas enters the chamber through the raw gas inlet, then undergoes pyrolysis at high temperature to form a carbon film deposited on the optical fiber; finally, other products are discharged from the raw gas outlet.

The first carbon-coating reaction chamber 1 is positioned proximate to the drawing furnace 6 so as to use the residual heat therefrom to heat the optical fiber. Therefore, the present invention is capable of utilizing the residual heat of the optical fiber to carry out the reaction in the first carbon-coating reaction chamber 1, to form the first carbon film layer. Preferably, an optical fiber heating device (the optical fiber heating furnace 5) is arranged on the travel path of the optical fiber between the drawing furnace 6 and the first carbon-coating reaction chamber 1. Therefore, heating can be achieved by residual heat from the drawing furnace 6 and by the optical fiber heating furnace 5 to provide heat for the deposition reaction and control the temperature of the bare optical fibers.

The second carbon-coating reaction chamber 2 is used for forming the second carbon film layer. The second carbon-coating reaction chamber 2 preferably has a glass round tube structure and comprises a second deposition chamber 21 and second sealing chambers 22, wherein the second sealing chambers 22 are disposed at two axial ends of the second deposition chamber 21. The second deposition chamber 21 is provided with a protective gas inlet, and during the reaction process, a protective gas (inert gas or nitrogen gas) is continuously introduced through the corresponding protective gas inlet to prevent air from entering the second deposition chamber 21, thereby achieving the purpose of gas sealing. The second deposition chamber 21 is provided with a first induction coil 23coaxial therewith on its outer periphery. Compared with the first carbon-coating reaction chamber 1, the second carbon-coating reaction chamber 2 is additionally equipted with an induction coil around its reaction zone, and the induction coil is coaxially arranged with the reaction chamber. An alternating current is applied to the ends of the induction coil to provide heat for the deposition reaction through inductive electrothermal effect.

Preferably, the second carbon-coating reaction chamber 2 has an inner diameter of 20-40 mm and a length of 300-400 mm. The second sealing chamber 22 has an inner diameter the same as that of the second deposition chamber 21, and the second sealing chamber 22 has a length of preferably 20-40 mm. The second deposition chamber 21 is provided with corresponding optical fiber through holes at its two axial ends for the entry and exit of the optical fibers, wherein the optical fiber through hole has a diameter of preferably 5-15 mm.

Preferably, the first induction coil 23 has an inner diameter (referring to a radial distance of the induction coil outside the carbon-coating reaction chamber) of 50 mm-70 mm, and the first induction coil 23 has a wire diameter (referring to a diameter of a conductor wire used) of preferably 1 mm-4 mm, and the spacing between adjacent turns of the induction coil is about twice the wire diameter, preferably 2 mm-8 mm. The temperature of the reaction zone depends on multiple factors such as the thickness of the carbon film deposited in the first layer, the coil specifications, and the alternating current.

The resin coating device 3 is preferably a coating cup containing polyimide, and coating is completed as the optical fiber passes therethrough. The resin coating device of the present invention may be any device known in the prior art that is capable of performing resin coating.

The curing device 4 is a resin curing device, and the main structure of the curing device is a curing chamber 41, which is preferably a glass tube. Both axial ends of the curing chamber 41 are open-ended. a suction port is provided close to the axial end of the curing chamber 41 and connected to a suction device. A second induction coil 42 is disposed coaxially surrounding the curing chamber 41. After the resin-coated optical fiber enters the curing device, an alternating current is applied to the induction coil. Heat induced in the carbon film (mainly a graphite-like amorphous carbon film) heats and cures the coating, and the waste gas generated during curing (such as the solvent volatilized during the polyimide curing process) is discharged from the suction port. The curing device chamber 4 has an inner diameter of preferably 100-200 mm, and has a length of preferably 500-1500 mm.

Preferably, the second induction coil 42 has an inner diameter (referring to the radial distance of the induction coil outside the curing device) of 130-230 mm, which needs to be slightly larger than the outer diameter of the curing device to ensure the heating effiency. The second induction coil 42 has a wire diameter (referring to a diameter of the conductor wire used) of preferably 1 mm-4 mm. The spacing between adjacent turns of the second induction coil 42 gradually decreases from top to bottom (from the optical fiber inlet end to the optical fiber outlet end of the curing device), tapering from 50 mm to 10 mm. The gradual decrease in spacing is for the purpose of making the temperature inside the chamber of the curing device relatively uniform. Since the heat inside the curing chamber tends to rise upward, a uniformly arranged coil spacing would result in a significantly higher temperature at the upper part of the curing tube than at the lower part. Excessively high temperature would cause the polyimide solvent to boil, resulting in the occurrence of bubbles in the high-temperature resistant coating; and excessively low temperature would fail to achieve a satisfactory curing effect.

In addition, the first induction coil surrounding the second carbon-coating reaction chamber 2 and the second induction coil surrounding the curing device 4 of the present invention are positioned outside the corresponding reaction chambers. This arrangement prevents contamination, and avoids the problem of impairing the induction heating effect due to deposition of a large amount of carbon film and by-products on the coils when arranged inside.

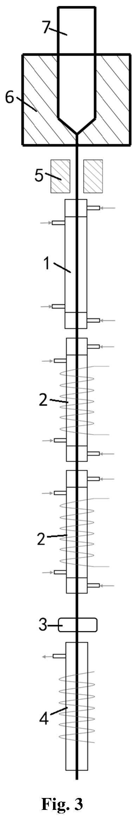

In a second embodiment of the present invention, as shown in Figure 3, the system for preparing the high-temperature resistant carbon-coated optical fiber of this embodiment comprises a drawing furnace 6, an optical fiber heating furnace 5, a first carbon-coating reaction chamber 1, two second carbon-coating reaction chambers 2, a resin coating cup 3, and a curing device 4 arranged in sequence. This embodiment differs from the first embodiment in that it comprises two second carbon-coating reaction chambers 2.

It will be understood that, in the systems for preparing the high-temperature resistant carbon-coated optical fiber as shown in Figs. 2 and 3 of the present invention, one second carbon-coating reaction chamber 2 and two second carbon-coating reaction chambers 2 are included respectively, that is, carbon film deposition by induction coil heating is performed once and two times respectively. When multiple carbon film depositions are required, the number of the second carbon-coating reaction chambers 2 may be increased correspondingly according to the number of carbon film depositions.

Further, according to an embodiment of the present invention, there is also provided a high-temperature resistant carbon-coated optical fiber prepared by the above-described preparation method, comprising a core layer, a cladding layer, a carbon-coating layer, and a resin-coating layer arranged in sequence from inside to outside. The deposition process of the carbon-coating layer adopts the cold-wall chemical vapor deposition method, and is formed by multiple depositions of nanoscale carbon films. The inner layer of the carbon-coated layer is the first carbon-coated layer, and the outer layer thereof is the second carbon-coated layer, wherein the first carbon film layer is a graphite-like amorphous carbon film; and the second carbon film layer is a diamond-like amorphous carbon film, or a graphite-like amorphous carbon film, or a composite carbon film layer formed by stacking at least one layer of graphite-like amorphous carbon film and at least one layer of diamond-like amorphous carbon film in the thickness direction. The resin-coating layer is a thermosetting coating layer, and is preferably made of polyimide. The resin-coated layer is formed by one or more coating and curing processes of the thermosetting coating.

The first carbon film layer has a thickness of preferably 20-40 nm. If the first carbon film layer is too thin, it cannot induce current subsequently, resulting in low efficiency in subsequent carbon film deposition or thermosetting coating curing; and if the first carbon film layer is too thick, the stress in the first carbon film layer will be relatively high. More preferably, the thickness thereof is 30-40 nm. The first carbon film layer has a surface roughness of ≤3 nm. The carbon film is uniformly deposited, such that the first carbon film layer has good sealing performance, generates little stress on the cladding layer of the optical fiber, thereby exerting minimal influence on the strength of the optical fiber.

If the second carbon film layer is solely composed of a diamond-like amorphous carbon film, its thickness is 20-60 nm, and the surface roughness thereof is ≤3 nm. The carbon film is uniformly deposited, has a relatively high hardness, and can withstand a relatively high lateral stress. If the diamond-like amorphous carbon film of the second carbon film layer is too thin, the mechanical protection performance of the carbon film is poor; and if the diamond-like amorphous carbon film of the second carbon film layer is too thick, the stress in the diamond-like amorphous carbon film of the second carbon film layer will be relatively high. The diamond-like amorphous carbon film of the second carbon film layer has a surface roughness of ≤ 3nm. The carbon film is uniformly deposited, has a relatively high hardness, and can withstand a relatively high lateral stress.

If the second carbon film layer is a composite carbon film layer formed by stacking at least one layer of graphite-like amorphous carbon film and at least one layer of diamond-like amorphous carbon film in a thickness direction, each graphite-like amorphous carbon film has a thickness of preferably 10-20 nm, and a surface roughness of ≤3 nm; and each diamond-like amorphous carbon film has a thickness of preferably 10-30 nm, and a surface roughness of ≤3 nm. The composite carbon film layer has a total thickness of ≤150 nm. If the composite carbon film layer is too thick, the overall carbon film layer will have a relatively high stress.

The carbon-coated optical fiber according to the embodiment of the present invention comprises a carbon-coated single-mode optical fiber and a carbon-coated multi-mode optical fiber. After being left in a hydrogen gas environment at 85°C and 11 atm for 7 days, the carbon-coated single-mode optical fiber has an additional attenuation of < 0.2 dB/km at a wavelength of 1240 nm, and the carbon-coated multi-mode optical fiber has an additional attenuation of < 0.2 dB/km at a wavelength of 850 nm.

The present invention provides a high-temperature resistant carbon-coated optical fiber, preparation method therefor and preparation system thereof. The prepared optical fiber comprises a carbon film having a multi-layered structure. The inner layer is mainly composed of a graphite-like amorphous carbon film, and heat required for the reaction is provided by means of a preheating process; and the outer layer is mainly composed of a diamond-like amorphous carbon film, the preparation method involves adding an induction coil around the reaction zone of the carbon-coating reaction chamber, and the already deposited carbon film is used as a heating element, heat for subsequent deposition reactions is provided by means of induction heating, so as to form the diamond-like amorphous carbon film (or a composite carbon film of a graphite-like amorphous carbon film and a diamond-like amorphous carbon film). Finally, the thermosetting coating is cured by controlling the temperature of the curing zone by means of an improved multi-stage coil design, so as to obtain the high-temperature resistant carbon-coated optical fiber.

In order to achieve a better understanding of the preparation method, preparation system, and product according to the embodiments of the present invention, the following examples are provided:
If the temperature of the reaction zone on the surface of the optical fiber in the second carbon-coating reaction chamber is controlled to be 800-1100°C by adjusting the parameters of the induced current, a new layer of graphite-like amorphous carbon film can be formed on the first graphite-like amorphous carbon film.

The temperature of the reaction zone on the surface of the optical fiber in the second carbon-coating reaction chamber is controlled to be higher than 1100°C (preferably 1100-1300°C) by adjusting the parameters of the induced current, a layer of diamond-like amorphous carbon film can be obtained.

The heating of the optical fiber is achieved by using the residual heat from the drawing furnace (at approximately 2000°C) or by using a heating device to heat the optical fiber to 800-1100°C, such that the temperature of the optical fiber entering the first carbon-coating reaction chamber reaches 800-1100°C.

### Example 1

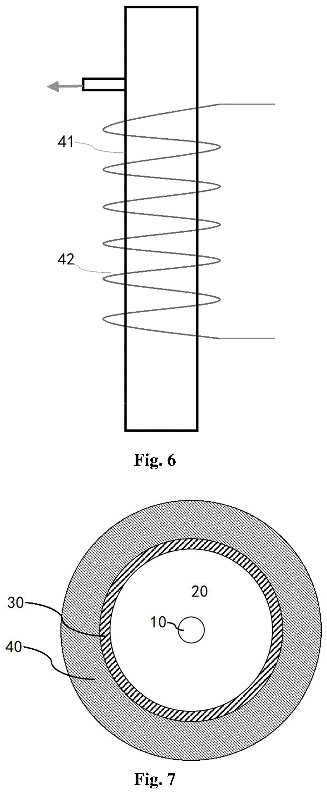

This example utilized the system for preparing the high-temperature resistant carbon-coated optical fiber as shown in Figure 2, and the prepared high-temperature resistant carbon-coated optical fiber was shown in Figure 7. The core layer 10 drawn in this example was a G652D single-mode optical fiber, and had a diameter of 9 µm. The cladding layer 20 had a diameter of 125 µm. The raw gas used in both reaction chambers was a mixed gas of acetylene and helium gas, with an acetylene concentration of 10%-30%. The total flow rate of the raw gas in both carbon-coating reaction chambers (i.e., the feed rate of the mixed gas) was 0.5-1 L/min, and the exhaust rate needed to be higher than the feed rate by 0.5-1 L/min to maintain stable gas flow in the chambers. The drawing speed was 40-80m/min. The optical fiber was heated to 900-1000°C by using a heating device, and then fed into the first carbon-coating reaction chamber, ensuring that the temperature of the reaction zone on the surface of the optical fiber in the first carbon-coating reaction chamber was maintained at 900-1000°C, thereby forming a layer of graphite-like amorphous carbon film on the cladding layer. The induction coil used in the second carbon-coating reaction chamber 2 had a rated output power of 2kW, an alternating current frequency of 18kHz, and a rated input current of 3A, such that the temperature of the reaction zone on the surface of the optical fiber in the second carbon-coating reaction chamber was higher than 1100°C, thereby forming a layer of diamond-like amorphous carbon film on the first graphite-like amorphous carbon film. The graphite-like amorphous carbon film deposited in the first carbon-coating reaction chamber 1 had a thickness of 20-40 nm, and the diamond-like amorphous carbon film deposited in the second carbon-coating reaction chamber 2 had a thickness of 30-50nm. After the optical fiber passed through the first carbon-coating reaction chamber 1 and the second carbon-coating reaction chamber 2, a carbon-coating layer 30 was formed. Thereafter, the optical fiber was coated with polyimide coating and then sent to the curing device. The curing temperature of the polyimide coating in the curing device was controlled to be 80-350°C by adjusting the parameters of the induction coil current, thereby forming a resin-coated layer 40 with a thickness of 15 µm on the surface of the carbon-coating layer 30.

The carbon-coated polyimide single-mode optical fiber prepared in this example had an attenuation of 0.462 dB/km at 1310 nm and an attenuation of 0.295 dB/km at 1550 nm, a tensile strength of 3.53 GPa at F15% and a tensile strength of 3.56 GPa at F50%, and an nd value of 105. After being left in a hydrogen environment at 85°C and 11 atm for 7 days, the additional attenuation was < 0.2 dB/km at a wavelength of 1240 nm. The carbon-coated optical fiber obtained in this example exhibits excellent hydrogen damage resistance, high mechanical strength, and good uniformity.

### Example 2

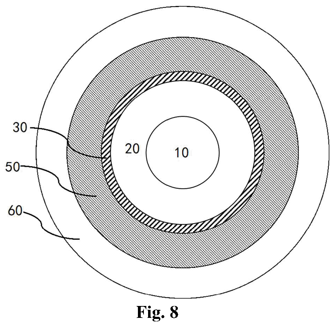

This example adopted the system for preparing the high-temperature resistant carbon-coated optical fiber as shown in Figure 3, and the prepared high-temperature resistant carbon-coated optical fiber was shown in Figure 8. The core layer 10 drawn in this example was a GI50 multi-mode optical fiber, and had a diameter of 50 µm. The cladding layer 20 had a diameter of 125 µm. The raw gas in all three reaction chambers was a mixed gas of acetylene and nitrogen gas, with an acetylene concentration of 30%-50%. The feed rate of the mixed gas in each reaction chamber was 0.5-1 L/min, and the exhaust rate needed to be higher than the feed rate by 0.5-1 L/min to maintain stable gas flow in the chambers. The drawing speed was 80-150m/min. The optical fiber was heated to 900-1000°C by using a heating device, and then fed into the first carbon-coating reaction chamber 1, ensuring that the temperature of the reaction zone on the surface of the optical fiber in the first carbon-coating reaction chamber was maintained at 900-1000°C, thereby forming a layer of graphite-like amorphous carbon film on the cladding layer. The induction coil in the first one of the second carbon-coating reaction chamber 2 had a rated output power of 2kW, an alternating current frequency of 18Hz, and a rated input current of 3A, such that the temperature of the reaction zone on the surface of the optical fiber in the second carbon-coating reaction chamber 2 was higher than 900-1000°C, thereby forming another layer of graphite-like amorphous carbon film on the first graphite-like amorphous carbon film. The induction coil in the second one of the second carbon-coating reaction chamber 2 had a rated output power of 3kW, an alternating current frequency of 18Hz, and a rated input current of 3A, such that the temperature of the reaction zone on the surface of the optical fiber in the reaction chamber 2 was higher than 1100°C, thereby forming diamond-like amorphous carbon film on the aforementioned another layer of graphite-like amorphous carbon film. The graphite-like amorphous carbon film deposited in the first carbon-coating reaction chamber 1 had a thickness of 20-40 nm, the graphite-like amorphous carbon film deposited in the first one of the second carbon-coating reaction chamber 2 had a thickness of 20-30 nm, and the diamond-like amorphous carbon film deposited in the second one of the second carbon-coating reaction chamber 2 had a thickness of 30-50nm. After the optical fiber passed through the first carbon-coating reaction chamber 1 and the two second carbon-coating reaction chambers 2, a carbon-coated layer 30 was formed. After the carbon film deposition was completed, the optical fiber was coated with thermosetting high-temperature resistant polyester coating for the first time and then sent to the first curing device, the curing temperature of the polyester coating in the first curing device was controlled to be 200-350°C by adjusting the parameters of the induction coil current, thereby forming a layer of inner resin coating 50 on the carbon-coating layer 30. Thereafter, the optical fiber was coated with the thermosetting high-temperature resistant polyester coating for the second time and then sent to the second curing device, the curing temperature of the polyester coating in the second curing device was controlled to be 200-350°C by adjusting the parameters of the induction coil current, thereby forming an outer resin coating 60 on the surface of the inner resin coating 50.

The carbon-coated high-temperature resistant multi-mode optical fiber prepared in this example had an attenuation of 2.46 dB/km at 850 nm and an attenuation of 0.68 dB/km at 1300 nm, a tensile strength of 3.45 GPa at F15% and a tensile strength of 3.53 GPa at F50%, and an nd value of 105. After being left in a hydrogen gas environment at 85°C and 11 atm for 7 days, the additional attenuation was < 0.2 dB/km at a wavelength of 850 nm. The carbon-coated optical fiber obtained in this example exhibits excellent hydrogen damage resistance, high mechanical strength, and good uniformity.

Those skilled in the art will easily understand that the above description only illustrates the preferred embodiments of the present invention and is not intended to limit the present invention. Any modifications, equivalent substitutions, improvements made within the spirit and principle of the present invention shall fall within the scope of protection of the present invention.

## Claims

1. A high-temperature resistant carbon-coated optical fiber, **characterized by** comprising a core layer, a cladding layer, a carbon coating layer, and a resin coating layer arranged in sequence from inside to outside, wherein
the carbon coating layer comprises a first carbon film layer and a second carbon film layer;
the first carbon film layer is a graphite-like amorphous carbon film; and
the second carbon film layer is a diamond-like amorphous carbon film or a graphite-like amorphous carbon film, or the second carbon film layer is a composite carbon film layer formed by stacking at least one graphite-like amorphous carbon film and at least one diamond-like amorphous carbon film in a thickness direction.

2. The high-temperature resistant carbon-coated optical fiber of claim 1, **characterized in that**, the carbon-coated optical fiber comprises a carbon-coated single-mode optical fiber and a carbon-coated multi-mode optical fiber; and after being kept in a hydrogen environment at 85°C and 11 atm for 7 days, the carbon-coated single-mode optical fiber has an additional attenuation of < 0.2 dB/km at a wavelength of 1240 nm, and the carbon-coated multi-mode optical fiber has an additional attenuation of < 0.2 dB/km at a wavelength of 850 nm.

3. A method for preparing a high-temperature resistant carbon-coated optical fiber, **characterized by** comprising the following steps:
S1, heating an optical fiber and then placing it in a first carbon-coating reaction chamber for carbon film deposition, to form a first carbon film layer on a surface of the optical fiber, wherein the first carbon film layer is a graphite-like amorphous carbon film;
S2, placing the optical fiber with the first carbon film layer deposited on its surface in a second carbon-coating reaction chamber for carbon film deposition, to form a second carbon film layer on the surface of the optical fiber, wherein the second carbon film layer is a graphite-like amorphous carbon film or a diamond-like amorphous carbon film, or the second carbon film layer is a composite carbon film layer formed by stacking at least one layer of graphite-like amorphous carbon film and at least one layer of diamond-like amorphous carbon film in a thickness direction;
wherein, a first induction coil is provided on an outer periphery of the second carbon-coating reaction chamber, and a temperature of a reaction zone on the surface of the optical fiber inside the second carbon-coating reaction chamber is controlled by the first induction coil; and
S3, coating the surface of the optical fiber deposited with the second carbon film layer with a thermosetting coating, and placing the optical fiber in a curing device for thermal curing, to obtain the high-temperature resistant carbon-coated optical fiber.

4. The method for preparing a high-temperature resistant carbon-coated optical fiber of claim 3, **characterized in that**, a second induction coil is provided on an outer periphery of the curing device, and a curing temperature of the thermosetting coating inside the curing device is controlled by the second induction coil.

5. The method for preparing a high-temperature resistant carbon-coated optical fiber of claim 3, **characterized in that**, in step S1, a temperature of the optical fiber entering the first carbon-coating reaction chamber is controlled to be 800-1100°C, such that the first carbon film layer is a graphite-like amorphous carbon film.

6. The method for preparing a high-temperature resistant carbon-coated optical fiber of claim 3, **characterized in that**, in step S2, a temperature of the optical fiber entering the second carbon-coating reaction chamber is controlled to be 800-1100°C, such that the second carbon film layer is a graphite-like amorphous carbon film layer; or,
in step S2, a temperature of the optical fiber entering the second carbon-coating reaction chamber is controlled to be higher than 1100°C, such that the second carbon film layer is a diamond-like amorphous carbon film.

7. The method for preparing a high-temperature resistant carbon-coated optical fiber of any one of claims 3-6, **characterized in that**, a raw gas in the first carbon-coating reaction chamber and the second carbon-coating reaction chamber comprises a hydrocarbon gas and a protective gas, and a volume proportion of the hydrocarbon gas in the raw gas is 15% to 75%; and a feed rate of the raw gas is 250 ml/min-2 L/min, an exhaust rate is higher than the feed rate by 0.5-1 L/min, and a drawing speed is 40-250 m/min.

8. The method for preparing a high-temperature resistant carbon-coated optical fiber of any one of claims 3-6, **characterized in that**, in step S3, a spacing between adjacent turns of the second induction coil gradually decreases from an optical fiber inlet end to an optical fiber outlet end of the curing device.

9. A system for preparing a high-temperature resistant carbon-coated optical fiber, applied to the method for preparing a high-temperature resistant carbon-coated optical fiber of any one of claims 3-8, **characterized in that**, the system comprises a drawing furnace, a first carbon-coating reaction chamber, at least one second carbon-coating reaction chamber, and at least one set of resin coating and curing device, arranged in sequence; wherein,
the drawing furnace is configured to heat an optical fiber preform and draw it into an optical fiber; meanwhile, residual heat of the drawing furnace is used to heat the optical fiber;
the first carbon-coating reaction chamber is configured for forming the first carbon film layer;
the second carbon-coating reaction chamber is configured for forming the second carbon film layer, and a first induction coil is provided on an outer periphery of the second carbon-coating reaction chamber; and
the resin coating and curing device comprises a resin coating device and a curing device; the resin coating device is used for coating a thermosetting coating; and the curing device is used for curing the thermosetting coating.

10. The system for preparing a high-temperature resistant carbon-coated optical fiber of claim 9, **characterized in that**, a second induction coil is provided on an outer periphery of the curing device.
